**Europäisches Patentamt**

**European Patent Office**

**Office européen des brevets**

(19)

(11) Veröffentlichungsnummer: **0 176 044**
**B1**

(12) **EUROPÄISCHE PATENTSCHRIFT**

(45) Veröffentlichungstag der Patentschrift:
27.12.89

(21) Anmeldenummer: **85111910.7**

(22) Anmeldetag: **20.09.85**

(51) Int. Cl.⁴: **B 29 C 49/46**, B 29 C 49/66

(54) Verfahren zur Herstellung von Hohlkörpern aus thermoplastischem Kunststoff.

(30) Priorität: **28.09.84 DE 3435592**

(43) Veröffentlichungstag der Anmeldung:
**02.04.86 Patentblatt 86/14**

(45) Bekanntmachung des Hinweises auf die Patenterteilung:
**27.12.89 Patentblatt 89/52**

(84) Benannte Vertragsstaaten:
**AT BE CH DE FR GB IT LI LU NL SE**

(56) Entgegenhaltungen:
**EP-A-0 039 929**
**EP-A-0 063 378**
**EP-A-0 210 344**
**EP-A-0 212 554**
**DE-A-1 905 094**
**DE-A-2 924 797**
**US-A-2 811 468**
**US-A-3 862 284**
**US-A-4 396 567**

(73) Patentinhaber: **Kautex- Werke Reinold Hagen
Aktiengesellschaft, D-5300 Bonn- Holzlar 1 (DE)**

(72) Erfinder: **Giese, Peter, Ing., Siebengebirgsstrasse
32, D-5300 Bonn 3 (Holzlar) (DE)**
Erfinder: **Holzmann, Rainer, Ing. grad.,
Siebengebirgsstrasse 122, D-5300 Bonn 3 (Holzlar)
(DE)**
Erfinder: **Schwochert, Hans- Joachim, Ing. grad.,
Gronewaldstrasse 40, D-5330 Königswinter 41 (DE)**
Erfinder: **Thomas, Alfred, Ing., Wiesenweg, D-5201
Dambroich (DE)**

(74) Vertreter: **Koepsell, Helmut, Dipl.- Ing.,
Mittelstrasse 7, D-5000 Köln 1 (DE)**

EP 0 176 044 B1

2

**Beschreibung**

Die Erfindung betrifft ein Verfahren zur Herstellung von Hohlkörpern aus thermoplastischem Kunststoff durch Blasformen, bei welchem ein vorzugsweise schlauchförmiger Vorformling gebildet und anschließend innerhalb einer Blasform unter Verwendung eines inertgases als Druckmittel zur Anlage an die Innenkontur der Blasform aufgeweitet und die Innenwandung des resultierenden Hohlkörpers innerhalb der Blasform durch ein Gas oder Gasgemisch (Reaktionsgas), das mit dem die Hohlkörperwandung bildenden Kunststoff reagiert, um diesen für Gase und/oder Flüssigkeiten weniger durchlässig zu machen, behandelt wird.

Bei einem durch die DE-PS 24 01 948 bekannten derartigen Verfahren wird ein schlauchförmiger Vorformling innerhalb der geschlossenen Blasform durch ein ein Inertgas enthaltendes Gasgemisch aufgeweitet, welches auch das Reaktionsgas enthält, bei welchem es sich um Fluor handelt. Bei diesem bekannten Verfahren erfüllt das Gasgemisch zwei Funktionen: Es dient einmal der Formgebung des herzustellenden Behälters und gleichzeitig auch der Behandlung der Innenwandung desselben. Die erste Funktion setzt voraus, daß mit verhältnismäßig hohem Druck gearbeitet wird der in vielen Fällen, insbesondere bei der Herstellung von dickwandigeren und kompliziert geformten Hohlkörpern, bei 8 - 10 bar und darüber liegt. Da die für die gewünschten Umsetzungen an der Innenwandung des Hohlkörpers in Betracht zu ziehenden Reaktionsgase durchweg stark umweltbelastend sind, erfordert das Arbeiten mit höheren Drücken besondere Vorkehrungen, um im Falle von Fehlblasungen, die bei der Herstellung von Hohlkörpern durch Blasformen nicht immer vermieden werden können, Gefährdungen der Umwelt auszuschließen. Dies gilt umso mehr, als zur Erzielung einer wirtschaftlichen Fertigung das die beiden vorgenannten Funktionen erfüllende Gasgemisch innerhalb des Hohlkörpers fortlaufend ausgetauscht werden muß, um auf diese Weise den Hohlkörper auch innenseitig zu kühlen. Zudem erfordert das Arbeiten unter hohem Druck eine große Menge an Reaktionsgas.

Ferner offenbart die DE-OS-2 924 797 ein Verfahren zum Blasformen von Artikeln aus einem hohlen Vorformling aus thermoplastischem Kunststoff, bei welchem das Reaktionsgas vor dem Einbringen des Vorformlinges in die Blasform in den Vorformling eingeführt wird mit dem Ziel, die gewünschte Umsetzung bereits an der Innenwandung des Vorformlinges zu bewirken, der anschließend unter Zuführung eines besonderen, kein Reaktionsgas enthaltenden gasförmigen Druckmediums in der Blasform zum gewünschten Hohlkörper aufgeweitet wird. Dieses bekannte Verfahren, welches darüber hinaus die Möglichkeit vorsieht, das das Reaktionsgas enthaltende Gemisch auch zu dem in vielen Fällen üblichen oder sogar erforderlichen Voraufweiten des Vorformlinges außerhalb der Blasform zu verwenden, ermöglicht die Anwendung eines geringeren Druckes für das Behandeln des Vorformlinges und das gegebenenfalls erforderliche Voraufweiten. Das vom Reaktionsgasgemisch auszufüllende Volumen ist selbst heim Voraufweiten geringer als beim erstgenannten bekannten Verfahren. Jedoch kann dabei das Auftreten anderer Nachteile nicht ausgeschlossen werden. Die durch das Reaktionsgas beeinflußte innere Schicht der Hohlkörperwandung erfährt, auch wenn eine Voraufweitung stattgefunden haben sollte, bei der endgültigen Formgebung innerhalb der Blasform eine Dehnung oder Streckung, die der Dehnung bzw. Streckung entspricht, die der Vorformling insgesamt beim endgültigen Aufweiten erfährt. Es ist schwierig, wenn nicht sogar unmöglich, eine über die gesamte Hohlkörperwandung gleichmäßige Dehnung oder Streckung zu erzielen. Da die Dehnung oder Streckung der Hohlkörperwandung zwangsläufig auch eine gleichzeitige Verringerung der Wandstärke bewirkt, erfährt auch die durch das Reaktionsgas beeinflußte Schicht der Hohlkörperwandung eine entsprechende Änderung ihrer Dicke, deren Ausmaß abhängig ist vom Ausmaß der Dehnung oder Streckung. Da, wie gesagt, letztere ungleichmäßig ist, wird letztenendes auch die Dicke der vom Reaktionsgas beeinflußten Schicht am fertigen Hohlkörper ungleichmäßig. Die bis zur völligen Undurchlässigkeit angestrebte Verringerung der Durchlässigkeit der Wandung für Gase und Flüssigkeiten hängt auch ab von der Dicke der durch das Reaktionsgas behandelten Schicht der Hohlkörperwandung, so daß zur Erzielung eines bestimmten Effektes die Dicke dieser behandelten Schicht am Vorformling so gewählt werden muß, daß auch in dem Bereich, in welchem die Wandung des Hohlkörpers ihre stärkste Streckung oder Dehnung hat, am Fertigerzeugnis, also am aufgeweiteten Hohlkörper, immer noch eine ausreichende Schichtdicke vorhanden ist. Dies kann dazu führen, daß in anderen Bereichen eine dickere Schicht als für den angestrebten Effekt notwendig vorhanden ist. Dadurch wird die Behandlung der Wandung des Vorformlings durch das Reaktionsgas aufwendiger, sei es durch längere Einwirkungsdauer des Reaktionsgases, sei es durch größere Konzentration desselben, als bei Behandlung der Innenwandung des fertigen Hohlkörpers durch das Reaktionsgas. Hinzu kommt, daß der Vorformling innerhalb der Blasform an wenigstens einem Ende, in vielen Fällen aber auch in anderen Bereichen, durch Bildung jeweils einer Schweißnaht verschlossen werden muß, wobei dieser Verschließvorgang im allgemeinen einhergeht mit dem gleichzeitige Abquetschen von Überschußmaterial vom Vorformling. Zu diesem Zweck sind die die Blasform bildenden Teile mit Abquetschkanten versehen, zwischen denen einmal überschüssiges Material abgequetscht und zugleich die vorerwähnte Schweißnaht gebildet wird. Die Güte der letzteren ist für die Verwendbarkeit des Hohlkörpers von entscheidender Bedeutung. Es kann nicht ausgeschlossen werden, daß durch die che-

2

mische Beeinflussung der Innenwandung des Vorformlinges durch das Reaktionsgas die für die Bildung der Schweißnaht wesentlichen Eigenschaften der inneren Wandung des Vorformlinges nachteilig beeinflußt werden. Dies gilt auch dann, wenn der Vorformling eine Voraufweitung erfährt, da auch in diesem Fall das Abquetschen von Überschußmaterial und das Bilden von Schweißnähten erst beim Schließen der Blasform um den voraufgeweiteten Vorformling erfolgen.

Der Erfindung liegt die Aufgabe zugrunde, das Verfahren der einleitend beschriebenen Art so abzuwandeln, daß die Nachteile bekannter Verfahren vermieden werden. Insbesondere wird eine Verfahrensführung angestrebt, bei welcher das Reaktionsgas mit der zu behandelnden Kunststoffwandung unter einem möglichst geringen Druck erst zu einem Zeitpunkt in Berührung gebracht wird, in welchem alle Schweißvorgänge am Vorformling bzw. an dem daraus herzustellenden Hohlkörper abgeschlossen sind. Die Menge an in den Hohlkörper einzuführenden Reaktionsgas soll möglichst klein sein, ohne daß der Zeitaufwand für die Herstellung eines Hohlkörpers eine ins Gewicht fallende Vergrößerung erfährt. Ferner wird angestrebt, daß die für die Durchführung des Verfahrens erforderliche Vorrichtung bezüglich Aufbau und Handhabung möglichst einfach ist.

Zur Lösung dieser Aufgabe schlägt die Erfindung vor, daß der Vorformling zunächst unter Verwendung eines Inertgases unter hohem Druck bis zur völligen Anlage an die Innenkontur der Blasform aufgeweitet wird, worauf der Innendruck im so hergestellten Hohlkörper abgesenkt und das Reaktionsgas unter einem Druck, der erheblich unter dem Druck liegt, in welchem der Vorformling zuvor aufgeweitet worden war, in das Innere des Hohlkörpers eingeführt wird und nach der erforderlichen Reaktionszeit das Reaktionsgas durch ein Spülgas ersetzt wird, welches der möglichst weitgehenden Entfernung von Reaktionsgasbestandteilen innerhalb des Hohlkörpers und der Kühlung desselben dient.

Durch die Trennung der beiden das Aufweiten des Vorformlings zum Hohlkörper einerseits und das Behandeln der Innenwandung des Hohlkörpers andererseits betreffende Funktionen werden wesentliche Vorteile erzielt, die einmal darin bestehen, daß für den Aufweitvorgang optimale Betriebsbedingungen eingehalten werden können, da bei diesem Verfahrensschritt die bei der Einwirkung des Reaktionsgases auf die Innenwandung des Hohlkörpers zu beachtenden Erfordernisse und Vorkehrungen noch nicht berücksichtigt zu werden brauchen. Am Ende des Aufweitvorganges ist die Bildung sämtlicher Schweißverbindungen am Hohlkörper abgeschlossen, so daß eine dann erfolgende Behandlung mit dem Reaktionsgas ohne Einfluß auf die Qualität der Schweißnähte bleibt. Dies gilt auch für das Anbringen von Zusatzteilen am Hohlkörper, die häufig ebenfalls aus Kunststoff bestehen und im Zuge des Aufweitens des Vorformlinges zum Hohlkörper mit letzterem durch Verschweißen verbunden werden. Hierzu ist ein verhältnismäßig hohes Druckniveau erforderlich, das 10 bar und mehr betragen kann. Die nach der weitgehenden Entleerung des Hohlkörpers vom Blasgas erfolgende Einführung des Reaktionsgases in denselben kann unter verhältnismäßig geringem Druck erfolgen mit dem Vorteil, daß im Falle von Undichtigkeiten, insbesondere durch Fehler am Hohlkörper, das Ausmaß von Verunreinigungen der Umgebung durch das Reaktionsgas gering bleibt. Das Einführen des Reaktionsgases unter geringen Druck in den zu behandelnden Hohlkörper gibt weiterhin die Möglichkeit, mit einer geringeren Menge an Reaktionsgas auszukommen. Dies begünstigt ebenfalls die Wirtschaftlichkeit des Verfahrens. Darüber hinaus werden mit abnehmender Menge an Reaktionsgas die mit der Entsorgung zusammenhängenden Problem verringert.

Gemäß einem weiteren Vorschlag der Erfindung kann der Innendruck im Hohlkörper nach dem Aufweiten desselben bis auf einen Wert unterhalb des Umgebungsluftdruckes, also im allgemeinen des atmosphärischen Luftdruckes, abgesenkt und zugleich ein entsprechender Unterdruck innerhalb der Blasform von außen auf den Behälter zur Einwirkung gebracht werden. Dazu sind die das Formnest begrenzenden Wandungen der Blasform mit Öffnungen zu versehen, die so angeordnet und so dimensioniert sind, daß einerseits durch sie Luft abgesaugt werden kann, ohne daß andererseits Kunststoff aus der Wandung des Hohlkörpers in diese Öffnungen hineingesagt wird. Das Absenken des Innendrucks im Hohlkörpern unter den Umgebungsluftdruck ist dann erforderlich, wenn das Reaktionsgas unter einem Druck, der unterhalb des Umgebungsluftdruckes liegt, in das Innere des Behälters eingebracht wird. Hier gelten die bereits genannten Vorteile bezüglich der mit abnehmendem Druck ebenfalls geringer werdende Reaktionsgasmenge und des geringeren Aufwandes für die Entsorgung in noch stärkerem Maße. Bei fehlerhaftem Hohlkörper, der ein Entweichen des Reaktionsgases durch die Wandung des Hohlkörpers ermöglicht, würde das Reaktionsgas lediglich in die Vorrichtung gelangen, durch welche der Unterdruck innerhalb der Blasform von außen auf dem Hohlkörper zur Einwirkung gebracht wird.

Das Reaktionsgas kann nach Beendigung der Zeit, während welcher es auf die Innenwandung des Hohlkörpers einwirkt, durch Druckerniedrigung weitgehend aus dem Hohlkörper entfernt werden, bevor das Spül- und Kühlgas, bei dem es sich um Luft, aber auch um ein Inertgas handeln kann, in den Hohlkörper eingeführt wird. Eine solche Verfahrensweise kann deshalb zweckmäßig sein, weil dann das aus Gründen des Umweltschutzes in besonderer Weise zu handhabende Gasgemisch ein verhältnismäßig kleines Volumen aufweist, also auf jene Menge beschränkt bleibt, die im wesentlichen dem Volumen des Hohlkörpers entspricht.

Es ist aber auch möglich, das Reaktionsgas durch Einführen von Spül- und Kühlgas ohne vorherige Druckverringerung zu entfernen. In diesem Fall würde das gesamte, zum Zwecke der Behandlung der Innenwandung im Hohlkörper befindliche Reaktionsgas durch das Spül- und Kühlgas unter entsprechender Verdünnung entfernt werden.

Das Spül- und Kühlgas wird vorteilhaft unter einem Druck in den Hohlkörper eingebracht, der merklich über dem Druck des Reaktionsgases liegt und gegebenenfalls größer ist als der Druck während des Aufweitens des Vorformlinges zum Hohlkörper. Dabei kann in üblicher Weise das Spül- und Kühlgas insbesondere zur Erhöhung der Kühlwirkung zumindest teilweise ausgetauscht werden derart, daß ständig oder zeitweilig ein bestimmter Anteil des Gases aus dem Hohlkörper abgeführt und entsprechender Anteil an Frischgas zugeführt wird. Andererseits besteht auch die Möglichkeit, den Druck des Spül- und Kühlgases in Intervallen abzusenken und wieder zu erhöhen. Auf diese Weise kann ein weitgehender Austausch des erwärmten Spül- und Kühlgases gegen frisches Spül- und Kühlgas erreicht werden. Einmal dient dies zur Intensivierung der Kühlung. Zum anderen können Reste von Reaktionsgas auch aus solchen Teilen des Hohlkörpers besser entfernt werden, die sich außerhalb des normalen Strömungsverlaufes des Gases befinden bzw. nur unvollkommen vom Gas durchströmt werden.

In der Zeichnung ist ein Ausführungsbeispiel der Erfindung dargestellt. Es zeigen:

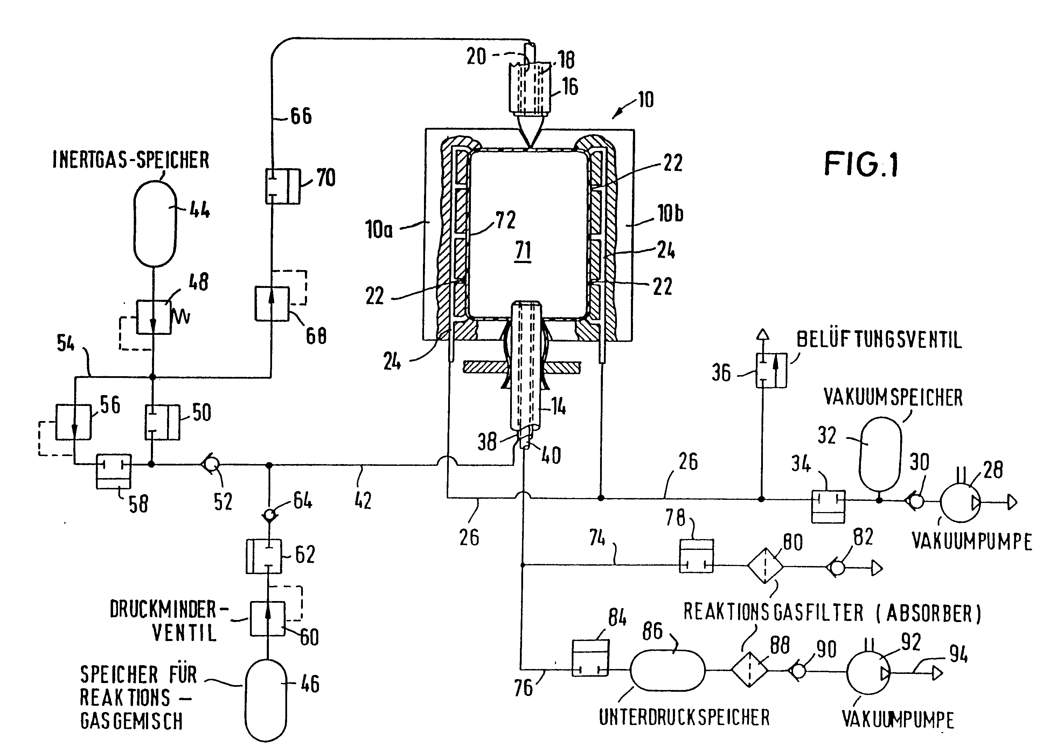

Fig. 1 im Schema eine Blasform mit zugehörigen Zuleitungen für die bei der Herstellung von Hohlkörpern verwendeten gasförmigen Medien,

Fig. 2a bis 2e im Schema die Ansicht einer Blasform, teilweise im Schnitt in fünf aufeinanderfolgenden Stadien bei der Herstellung eines Hohlkörpers,

Fig. 3 den Ablauf eines Arbeitszyklus zur Herstellung eines Hohlkörpers in Form einer vereinfachten graphischen Darstellung, in welcher der jeweils auf den Vorformling bzw. auf den daraus herzustellenden Hohlkörper einwirkende Druck über der Zeit aufgetragen ist.

Die Vorrichtung zur Durchführung des Verfahrens gemäß der Erfindung weist eine im allgemeinen zweigeteilte Blasform 10 auf, der ein von unten zwischen die beiden Blasformhälften 10a, 10b in das Formnest 12 hineinragender Blasdorn 14 zugeordnet ist. Die Vorrichtung weist weiterhin einen Extrusionskopf 16 einer Extrusionseinrichtung auf, der bei Herstellung eines schlauchförmige Vorformlinges mit einer ringförmigen Austrittsöffnung für das thermoplastische Material versehen ist. Diese ringförmige Austrittsöffnung ist innenseitig durch einen Kern 18 begrenzt, der mit einem nach unten sich öffnenden Kanal 20 für ein gasförmiges Medium versehen ist. Die beiden Hälften 10a, 10b der Blasform 10 sind an ihren das Formnest 12 begrenzenden Wandungen mit Öffnungen 22 versehen, die über Kanalsysteme 24 und Leitungen 26 an eine Unterdruckquelle 28, z. B. in Form einer Vakuumpumpe, anschließbar sind. In die Verbindungsleitung 26 sind ein Einwegventil 30, ein Vakuumspeicher 32, ein von außen betätigbares Absperrventil 34 und ein Belüftungsventil 36 eingeschaltet.

Der Blasdorn 14 ist mit zwei axialen Kanälen 38, 40 versehen, die zueinander derart koaxial angeordnet sind, daß der im Querschnitt ringförmige Kanal 38 den Kanal 40 umgibt. Der Kanal 38 ist über eine Leitung 42 mit einem Inertgasspeicher 44 sowie mit einem Reaktionsgasspeicher 46 verbindbar. Die Verbindung zwischen Inertgasspeicher 44 und Kanal 38 des Blasdornes 14 erfolgt über ein Druckminderventil 48, ein Absperrventil 50 und ein Einwegventil 52, welches Inertgas lediglich in Richtung vom Speicher 44 auf den Blasdorn 14 passieren läßt. Ferner ist ein das Absperrventil 50 überbrückende Zweigleitung 54 vorgesehen, die auch ein Druckminderventil 56 und ein Absperrventil 58 aufweist.

Der Reaktionsgasspeicher 46 ist ebenfalls unter Zwischenschaltung eines Druckminderventils 60, eines Absperrventils 62 und eines Einwegventiles 64, das das Gas lediglich in Richtung auf den Blasdorn 14 passieren läßt, mit dem Kanal 38 im Blasdorn 14 verbindbar.

Schließlich ist der Inertgasspeicher 44 über eine Leitung 66 mit dem Kanal 20 im Kern 18 des Extrusionskopfes 16 ebenfalls über ein Druckminderventil 68 und ein Absperrventil 70 verbindbar.

Der Kanal 40 im Blasdorn 14 dient der Ableitung der jeweiligen Gase bzw. Gasgemische aus dem Inneren 71 des in der Blasform 10 befindlichen Hohlkörpers 72. Dazu ist der Kanal 40 mit zwei Leitungen 74 und 76 verbindbar. In die Leitung 74 sind ein Absperrventil 78, ein z. B. als Adsorber ausgebildeter Filter 80 und ein Einwegventil 82 eingeschaltet, über welches Leitung 74 und damit Kanal 40 des Blasdornes 14 mit der Atmosphäre verbindbar sind.

Die Leitung 76 ist ebenfalls mit einem Absperrventil 84, darüber hinaus mit einem Unterdruckspeicher 86, einem Filter 88, einem Einwegventil 90 sowie einer Vakuumpumpe 92 versehen, über deren Unterdruckentlüftung 94 die Verbindung mit der Atmosphäre herstellbar ist.

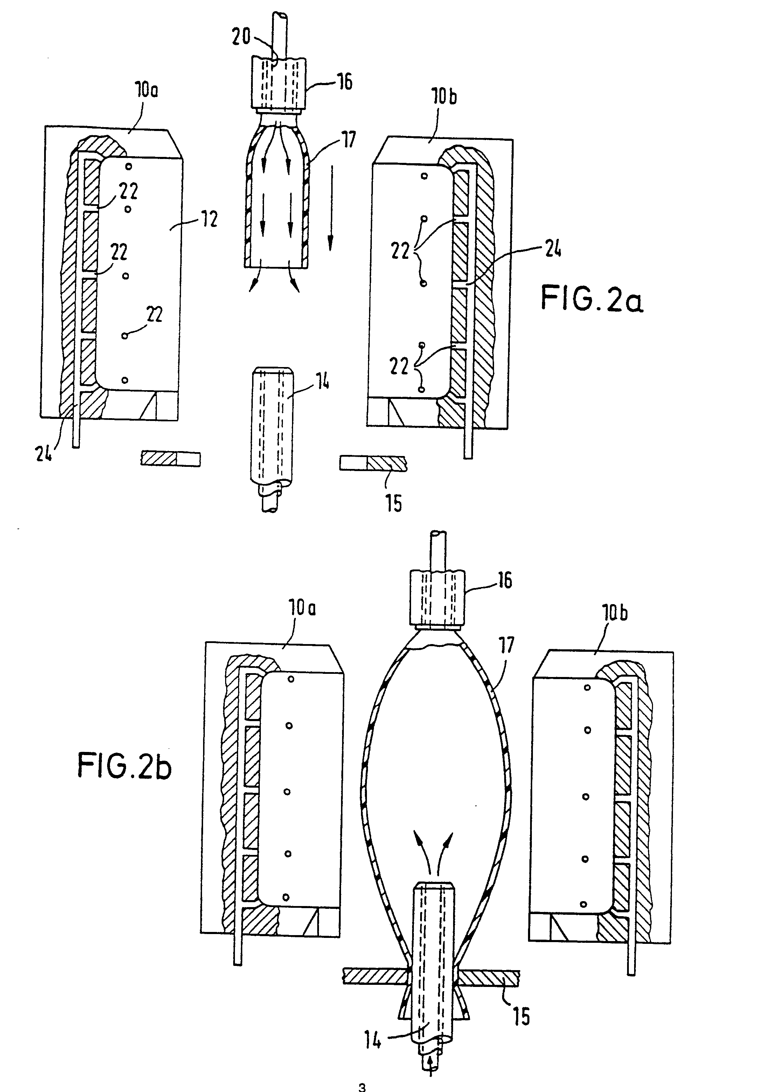

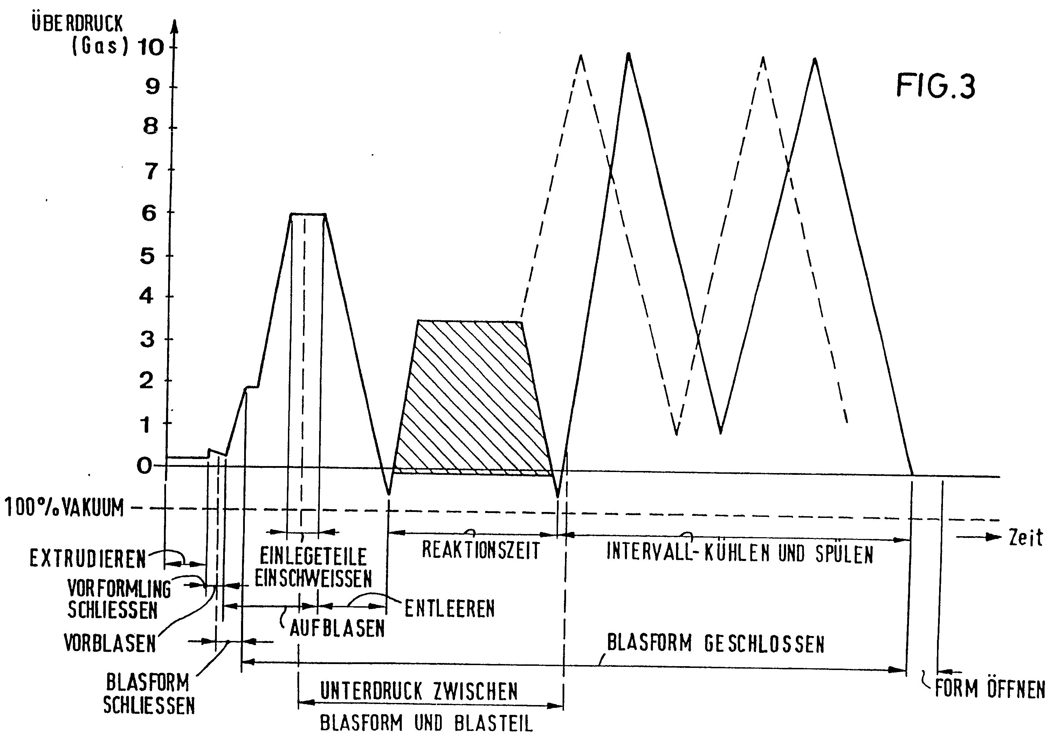

Der Arbeitszyklus zur Herstellung eines Hohlkörpers (sh. Fig. 2a - 2e) beginnt bei geöffneter Blasform 10 mit dem Extrudieren des Vorformlinges 17, der unabhängig davon, ob die Herstellung der Vorformlinge kontinuierlich oder absatzweise erfolgt, innenseitig mit Inertgas, beispielsweise $N_2$, gespült wird, um das Vorhandensein von Sauerstoff innerhalb des Vorformlings und damit später innerhalb des daraus zu fertigenden Hohlkörpers 72 zumindest bis zum Abschluß der Behandlung durch das Reaktionsgas auszuschließen. Das Inertgas kann in an sich bekannter Weise über Leitung 66 und Kanal 20 durch den Extrusionskopf 16 in den Vorformling 17 in letzteren eingeführt werden. Im allgemeinen wird so verfahren, daß in Abhängigkeit von der Extrusionsgeschwindigkeit eine Menge an Inertgas in den Vorformling eingeführt wird, die etwa der dreifachen Menge seines Endvolumens entspricht. Fig. 2a zeigt ein Zwischenstadium während der Herstellung des Vorformlinges 17. In Fig. 3 ist erkennbar, daß in dieser Phase mit geringem Überdruck gearbeitet wird.

In vielen Fällen, insbesondere bei der Herstellung von technischen Teilen und Großhohlkörpern, wird insbesondere zur Sicherstellung einer guten Wanddickenverteilung der Vorformling 17 voraufgeweitet, bevor die Blasform 10 geschlossen wird. Dies kann gemäß Fig. 2b in der Weise geschehen, daß der Vorformling 17 über den Blasdorn 14 extrudiert und mit seinem unteren Ende durch eine geeignete Klemmvorrichtung 15 um diesen geschlossen wird. Das Voraufweiten kann durch Inertgas über Leitung 42 und Blasdorn 14 bewirkt werden. Es ist natürlich auch möglich, dieses Gas über Leitung 66 und Kanal 20 im Extrusionskopf 16 zuzuführen. Das Ausmaß des Vorblasens kann durch ein bestimmtes Druckniveau, welches über eine definierte Zeit die Gaszufuhr bewirkt, gesteuert werden. Fig. 3 zeigt, daß das Voraufweiten unter geringfügig höherem Gasdruck als während des Extrudierens des Vorformlinges erfolgt.

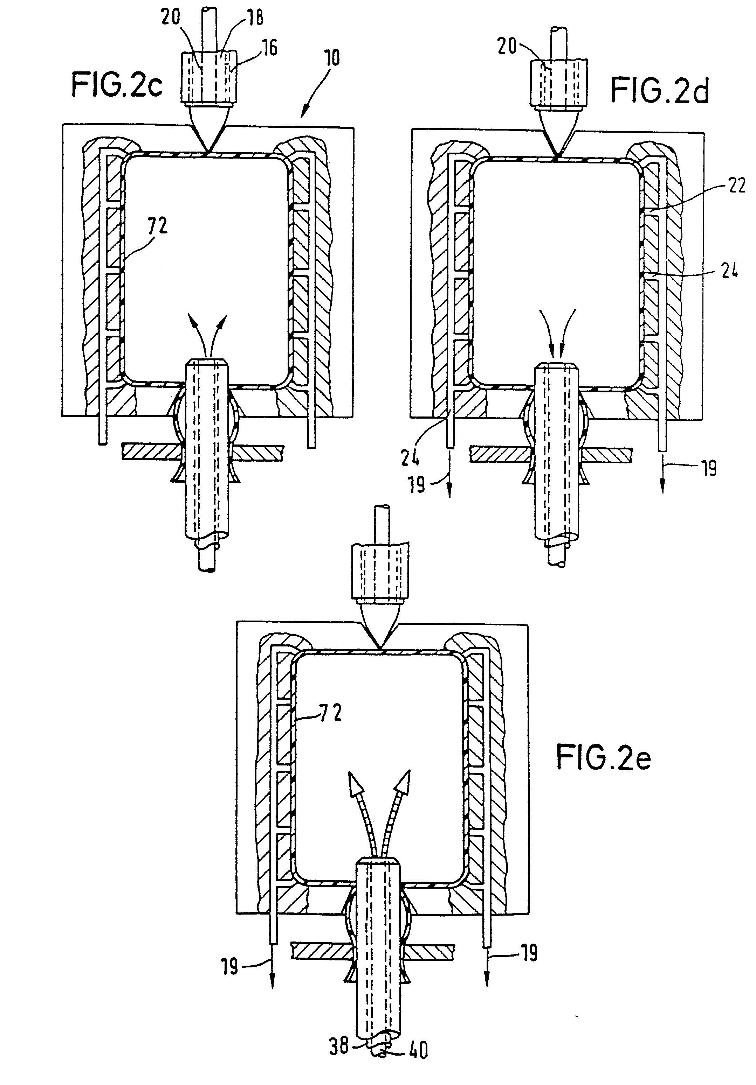

Die Blasform 10 wird dann um den voraufgeweitete Vorformling geschlossen. Kurz vor Beendigung des Schließens der Blasform 10 wird mit dem eigentlichen Blasvorgang begonnen, d. h., es wird Inertgas über Leitungen 42 und Blasdorn 14 unter höherem Druck in den bereits voraufgeweiteten Vorformling 17 eingeführt mit dem Ergebnis, daß der Vorformling überall zur Anlage an die Wandung des Formnestes 12 gebracht wird und somit dessen Gestalt annimmt, die der Gestalt des herzustellenden Hohlkörpers 72 entspricht (Fig. 2c). Das Aufblasen innerhalb der Blasform 10 erfolgt bei dem in Fig. 3 der Zeichnung dargestellten Ausführungsbeispiel in zwei Druckstufen. In einer ersten Druckstufe wird der Druck beispielsweise bis auf etwa 2 bar erhöht und beibehalten, bis die Schweißnahtbildung endgültig beendet ist. Danach wird der Druck bei dem in der Zeichnung dargestellten Ausführungsbeispiel in der zweiten Stufe auf 6 bar erhöht. Nach dem oder auch im Zuge des Erreichens des höchsten Blasdruckes können Kunststoffteile, die an der inneren Oberfläche des Artikels anzubringen sind, mit diesem durch Verschweißen verbunden werden. Auch in dieser Phase wird ausschließlich mit Inertgas als Blasgas gearbeitet.

Nachdem der Aufweitvorgang beendet und gegebenenfalls mit dem Hohlkörper 72 auf dessen Innenoberfläche zu verbindende Teile mit diesem verschweißtoder verklebt sind, wird das Blasgas unter entsprechender Druckverringerung im Inneren 71 des Hohlkörpers 72 aus diesem weitgehend entfernt. Wenn, wie dies bei dem in Fig. 3 der Zeichnung dargestellten Ausführungsbeispiel der Fall ist, am Ende dieses Vorganges der Druck innerhalb des Hohlkörpers 72 unter dem Umgebungsdruck liegt, ist es erforderlich, vorher von außen auf den in der Blasform 10 befindlichen Hohlkörper 72 über Leitung 26 und Öffnungen 22 in der Wandung des Formnestes 12 einen entsprechenden Unterdruck zur Einwirkung zu bringen, um zu verhindern, daß der noch nicht oder nur teilweise verfestigte Hohlkörper 72 unter der Einwirkung eines äußeren Überdruckes zusammengedrückt wird. Das Evakuieren ist in Fig. 2d und 2e durch Pfeile 19 angedeutet.

Danach wird das Reaktionsgas in den in der Blasform 10 befindlichen Hohlkörper 72 eingeführt (Fig. 2e), und zwar unter einem Druck, der merklich unter dem Druck des Blasgases liegt. Die Verweilzeit des Reaktionsgases im Hohlkörper hängt ab von der Zeit, die für die gewünschte Umsetzung zwischen Reaktionsgas und Innenwandung des Hohlkörpers 72 erforderlich ist. In Fig. 3 der Zeichnung sind mehrere Möglichkeiten dargestellt. So kann der Druck des Reaktionsgases etwa 3,5 bar betragen. Dies entspräche der oberen Begrenzungslinie des schraffierten Feldes in Fig. 3. Es ist aber auch möglich, das Reaktionsgas unter einem Druck in den Hohlkörper einzuführen, der unterhalb des Umgebungsdruckes liegt, also beispielsweise durch die das schraffierte Feld in Fig. 3 unterseitig begrenzenden Linie angegeben ist. Auch hier gilt, daß dann auf die Außenfläche des in der Form 10 befindlichen Hohlkörpers über die Öffnungen 22 ein entsprechender Unterdruck auf den Hohlkörper 10 zur Einwirkung gebracht werden muß.

Nach der erforderlichen Reaktionszeit kann, wie dies in Fig. 3 der Zeichnung in ausgezogenen Linien dargestellt ist, zunächst das Reaktionsgas durch entsprechende Druckabsenkung, ggf. bis unter den Umgebungsluftdruck, aus dem Hohlkörper 72 entfernt werden. Anschließend wird der Druck durch Zufuhr von Inertgas oder einem sonstige Spülgas auf den üblichen Blasdruck von 6 bis 10 bar, also deutlich über dem Druck, der bei Anwesenheit des Reaktionsgases innerhalb des Hohlkörpers herrschte, erhöht. Hierdurch erfolgt eine starke Verdünnung der im Hohlkörper 72 noch verbliebenen Reaktionsgasreste. Dann kann in üblicher Weise durch konstante Umkehrspülung, d. h. Ablassen von Spül- und Kühlgas aus dem Hohlkörper gegen ein einstellbares Druckventil bei gleichzeitiger Zufuhr frischen Gases, gespült und gekühlt werden. Es besteht auch die in Fig. 3 der Zeichnung dargestellte Möglichkeit, den Druck des Spül- und Kühlgases in Intervallen abzusenken und wieder zu erhöhen, um so die Innenkühlung zu intensivieren. Bei komplizierteren Hohlkörpern wird der Intervallkühlung der Vorzug zu geben sein, da durch das sich ändernde Druckniveau der Gasaustausch und damit der Wärmeaustausch über das Gas intensiver ist als bei der Umkehrspülung. Bei letzterer kommt es für eine gute Wirksamkeit auf eine definierte Luftströmung im Bereich der zu kühlenden Wandung des Hohlkörpers an. Dies ist jedenfalls bei unregelmäßig geformten Hohlkörpern kaum zu erreichen.

Die Intervallkühlung wird insbesondere bei der zweiten, in Fig. 3 gestrichelt dargestellten Möglichkeit zweckmäßiger sein, bei welcher das im Hohlkörper 72 befindliche Reaktionsgas vor der Zufuhr des Spül- und Kühlgases nicht durch Druckverringerung zu einem großen Teil aus dem Hohlkörper entfernt wird, sondern durch das mittels Druckerhöhung zugeführte Spül- und Kühlgas erheblich verdünnt wird. Bei Anwendung der Intervallkühlung wird bereits beim ersten Druckabfall ein erheblicher Teil des Reaktionsgases aus dem Hohlkörper entfernt. Außerdem wird auch hier unabhängig von mit dem Reaktionsgas zusammenhängenden Erwägungen die Kühlung des in der Blasform 10 befindlichen Hohlkörpers schneller erfolgen. Die Amplitude der Intervallkühlung hängt von den jeweiligen Gegebenheiten ab, insbesondere vom Innenvolumen des Hohlkörpers und den Querschnitten der Zuleitungen und Ableitungen. Mit nachlassendem Differenzdruck zwischen Hohlkörper und dem Umgebungsdruck nimmt die Geschwindigkeit, mit welcher das Spül- und Kühlgas aus dem Hohlkörper entfernt wird, ab.

Vor dem Öffnen der Hohlform zwecks Entnahme des Hohlkörpers wird in üblicher Weise der Innendruck des Hohlkörpers über Leitung 74 auf Umgebungsluft gesenkt.

Sofern zwischen Hohlkörper und Blasform ein Unterdruck angelegt worden war, wird spätestes zu diesem Zeitpunkt auch die Unterdruckquelle 28 abgeschaltet und das zugehörige System auf Umgebungsdruck gebracht.

Bei dem mit der Innenwandung des Hohlkörpers reagierenden Gas wird es sich normalerweise um Fluor handeln. Es können der auch andere Reaktionsgase verwendet werden.

**Patentansprüche**

1. Verfahren zur Herstellung von Hohlkörpern aus thermoplastischem Kunststoff durch Blasformen, bei welchem ein vorzugsweise schlauchförmiger Vorformling gebildet und anschließend innerhalb einer Blasform unter Verwendung eines Inertgases als Druckmittel zur Anlage an die Innenkontur der Blasform aufgeweitet und die Innenwandung des resultierenden Hohlkörpers innerhalb der Blasform durch ein Gas oder Gasgemisch (Reaktionsgas), das mit dem die Hohlkörperwandung bildenden Kunststoff reagiert, um diesen für Gas und/oder Flüssigkeiten undurchlässig zu machen, behandelt wird, dadurch gekennzeichnet, daß der schlauchförmige Vorformling zunächst unter Verwendung eines Inertgases unter hohem Druck bis zur völligen Anlage an die Innenkontur der Blasform aufgeweitet wird, worauf der Innendruck im Hohlkörper abgesenkt und das Reaktionsgas unter einem Druck, der merklich unter dem Druck liegt, mit welchem der Vorformling zuvor aufgeweitet worden war, in das Innere des Hohlkörpers eingeführt wird und nach der erforderlichen Reaktionszeit das Reaktionsgas durch ein Spülgas ersetzt wird, welches der möglichst weitgehenden Entfernung von Reaktionsgasbestandteilen innerhalb des Hohlkörpers und der Kühlung desselben dient.

2. Verfahren nach Anspruch 1, dadurch gekennzeichnet, daß der Innendruck im Hohlkörper nach dem Aufweiten desselben bis auf einen Wert unterhalb des Umgebungsdruckes abgesenkt und zugleich innerhalb der Blasform von außen auf dem Behälter ein höherer Unterdruck oder zumindest der gleiche Druck zur Einwirkung gebracht wird.

3. Verfahren nach einem der vorhergehenden Ansprüche, dadurch gekennzeichnet, daß das Reaktionsgas unter einem Druck, der unterhalb des Atmosphärendruckes liegt, in das Innere des Behälters eingebracht wird.

4. Verfahren nach einem der vorhergehenden Ansprüche, dadurch gekennzeichnet, daß das Reaktionsgas durch Druckerniedrigung weitgehend aus dem Hohlkörper entfernt wird bevor das Spül- und Kühlgas in den Hohlkörper eingeführt wird.

5. Verfahren nach Anspruch 1, dadurch gekennzeichnet, daß das Reaktionsgas durch Einführen von Spül- und Kühlgas ohne vorherige Druckverringerung entfernt wird.

6. Verfahren nach Anspruch 1, dadurch gekennzeichnet, daß das Spül- und Kühlgas unter einem Druck in den Hohlkörper eingebracht wird, der mindestens so groß, vorzugsweise größer ist als der Druck während des Aufweitens des Vorformlings zum Hohlkörper.

7. Verfahren nach Anspruch 1, dadurch gekennzeichnet, daß der Druck des Spül- und Kühlgases in Intervallen abgesenkt und wieder erhöht wird.

8. Verfahren nach Anspruch 1, dadurch gekennzeichnet, daß der maximale Druck des Spül- und Kühlgases innerhalb des Hohlkörpers unter dem Druck liegt, mit welchem der Vorformling aufgeweitet wird.

9. Verfahren nach einem der vorhergehenden Ansprüche, dadurch gekennzeichnet, daß die Reaktionsgasbehandlung des Hohlkörpers erst begonnen wird, wenn Schweiß- oder Klebevorgänge auf der bzw. mit den durch die Reaktionsgaszufuhr zu behandelnden Innenwandfläche(n) des Hohlkörpers abgeschlossen sind.

10. Verfahren nach Anspruch 9, dadurch gekennzeichnet, daß die Schweiß- oder Klebevorgänge beendet sind, bevor die Entleerung des Hohlkörpers vor der Reaktionsgaszufuhr einsetzt.

## Claims

1. A process for the production of hollow bodies of thermoplastic material by blow moulding wherein a preferably tubular preform is formed and then expanded within a blowing mould using an inert gas as a pressure fluid to cause the preform to bear against the inside contour of the blowing mould and the inside wall of the resulting hollow body is treated within the blowing mould by a gas or gas mixture (reaction gas) which reacts with the plastics material forming the wall of the hollow body in order to make it impervious to gas and/or liquids characterised in that the tubular preform is initially expanded using an inert gas under high pressure until it bears completely against the inside contour of the blowing mould, whereupon the internal pressure in the hollow body is reduced and the reaction gas is introduced into the interior of the hollow body under a pressure which is substantially below the pressure with which the preform had been previously expanded and after the necessary reaction time the reaction gas is replaced by a flushing gas which serves for removing as extensively as possible reaction gas constituents within the hollow body and for cooling of the hollow body.

2. A process according to claim 1 characterised in that the internal pressure in the hollow body after expansion thereof is reduced to a value below the ambient pressure and at the same time a more greatly reduced pressure or at least the same pressure is caused to act from the outside on the container within the blowing mould.

3. A process according to one of the preceding claims wherein the reaction gas is introduced into the interior of the container under a pressure which is below the atmospheric pressure.

4. A process according to one of the preceding claims characterised in that the reaction gas is substantially removed from the hollow body by a reduction in pressure before the flushing and cooling gas is introduced into the hollow body.

5. A process according to claim 1 characterised in that the reaction gas is removed by introducing flushing and cooling gas without a reduction in pressure beforehand.

6. A process according to claim 1 characterised in that the flushing and cooling gas is introduced into the hollow body under a pressure which is at least as great as and preferably greater than the pressure during the operation of expanding the preform to form the hollow body.

7. A process according to claim 1 characterised in that the pressure of the flushing and cooling gas is reduced and increased again at intervals of time.

8. A process according to claim 1 characterised in that the maximum pressure of the flushing and cooling gas within the hollow body is below the pressure with which the preform is expanded.

9. A process according to one of the preceding claims characterised in that the reaction gas treatment of the hollow body is begun only when welding or glueing operations on the or to the inside wall surface or surfaces of the hollow body, which is or are to be treated by the reaction gas feed, are concluded.

10. A process according to claim 9 characterised in that the welding or glueing operations are concluded before the operation of emptying the hollow body, before the reaction gas feed, starts.

## Revendications

1. Procédé pour fabriquer des corps creux en matière thermoplastique par soufflage dans un moule, à partir d'une ébauche de préférence tubulaire, que l'on soumet, à l'intérieur du moule de soufflage, à l'effet d'un fluide sous pression constitué par un gaz inerte, pour dilater l'ébauche afin de l'appliquer sur la paroi interne du moule de soufflage, alors que l'on traite ensuite à l'intérieur du moule de soufflage la paroi interne du corps creux ainsi obtenu par un gaz ou mélange gazeux (dit gaz de réaction) qui réagit avec la matière plastique constituant la paroi du corps creux, pour rendre cette paroi imperméable aux gaz et/ou aux liquides, caractérisé en ce qu'on assure d'abord la dilatation de l'ébauche au moyen d'un gaz inerte à forte pression, jusqu'à une application complète contre la paroi interne du moule de soufflage, ensuite on abaisse la pression interne existant dans le corps creux, et on introduit le gaz de réaction dans le corps creux, à une pression nettement inférieure à celle qui vient de servir pour la dilatation de l'ébauche, puis, après le délai de réaction nécessaire pour le gaz de réaction, on remplace celui-ci par un gaz de balayage qui sert à assurer une évacuation aussi complète que possible des composants du gaz de réaction hors du corps creux, et à refroidir celui-ci.

2. Procédé selon la revendication 1, caractérisé en ce qu'on abaisse la pression interne appliquée au corps creux, après la dilatation de celui-ci, jusqu'à une valeur inférieure à celle de la pression ambiante, et en ce qu'on applique en même temps, par l'extérieur, sur la face externe du corps creux logé dans le moule de soufflage, une dépression de valeur supérieure ou au moins égale à celle de la dépression intérieure du corps creux.

3. Procédé selon l'une des revendications 1 ou 2, caractérisé en ce qu'on introduit le gaz de réaction à l'intérieur du corps creux à une pression inférieure à la pression atmosphérique.

4. Procédé selon l'une des revendications 1 à 3, caractérisé en ce qu'on assure l'évacuation du gaz de réaction hors du corps creux, dans une large mesure, par un abaissement de pression, avant d'introduire le gaz de balayage et de refroidissement dans le corps creux.

5. Procédé selon la revendication 1, caractérisé en ce qu'on assure l'évacuation du gaz de réaction sous l'effet de l'introduction du gaz de balayage et de refroidissement, sans abaissement préalable de la pression.

6. Procédé selon la revendication 1, caractérisé en ce qu'on introduit le gaz de balayage et de refroidissement dans le corps creux à une pression au moins égale à la pression de dilatation appliquée à l'ébauche pour la transformer en corps creux, cette pression d'introduction du gaz de balayage et de refroidissement étant de préférence supérieure à la pression de dilatation précitée.

7. Procédé selon la revendication 1, caractérisé en ce qu'on abaisse par intervalles la pression du gaz de balayage et de refroidissement, pour la faire ensuite remonter à chaque fois.

8. Procédé selon la revendication 1, caractérisé en ce que la pression maximale du gaz de balayage et de refroidissement à l'intérieur du corps creux est inférieure à la pression de dilatation qui a été appliquée à l'ébauche.

9. Procédé selon l'une des revendications 1 à 8, caractérisé en ce qu'on commence à effectuer le traitement du corps creux par le gaz de réaction, seulement après l'achèvement des opérations de soudage ou de collage à réaliser sur ou avec chaque partie de la surface interne du corps creux à traiter par le gaz de réaction.

10. Procédé selon la revendication 9, caractérisé en ce qu'on termine les opérations de soudage ou de collage avant l'abaissement de pression interne du corps creux qui précède l'introduction du gaz de réaction.

FIG.1

FIG.2a

FIG.2b

3

FIG.2c

FIG.2d

FIG.2e

5

FIG.3

EP 0 176 044 B1